# EUROPEAN PATENT APPLICATION

(11) **EP 3 812 866 A1**
(43) Date of publication of application: **28.04.2021**
(21) Application number: 19910877.0
(22) Date of filing: 22.10.2019
(51) Int. Cl.: G05D 1/02

(54) **DRIVERLESS VEHICLE CONTROL METHOD AND DEVICE**

(30) Priority: 15.01.2019 CN 201910037537
(71) Applicant: Beijing Baidu Netcom Science and Technology Co., Ltd., Beijing 100085 (CN)
(72) Inventor: WANG, Yue, Beijing 100085 (CN); MIN, Ruihao, Beijing 100085 (CN); XUE, Jingjing, Beijing 100085 (CN); LIU, Yingnan, Beijing 100085 (CN); SHEN, Donghui, Beijing 100085 (CN); CHENG, Lie, Beijing 100085 (CN)
(74) Representative: Nederlandsch Octrooibureau
(86) International application number: PCT/CN2019/112541
(87) International publication number: WO 2020/147360

(57) **Abstract**

A driverless vehicle control method and device. Said method comprises: acquiring vehicle traveling environment information (201); determining, according to the vehicle traveling environment information, a traveling state to be entered by the driverless vehicle (202); and generating, in response to a detected interactive operation performed by a target user for the traveling state to be entered, a traveling state adjustment instruction corresponding to the interactive operation, and controlling the driverless vehicle to adjust the traveling state (203). Said method improves the flexibility of driverless vehicle control.

## Description

This patent application claims priority to Chinese Patent Application No. 201910037537.8, filed by Applicant BEIJING BAIDU NETCOM SCIENCE AND TECHNOLOGY CO., LTD. on January 15, 2019, and entitled "Control Method and Apparatus for Autonomous Vehicle", which is hereby incorporated by reference in its entirety.

### TECHNICAL FIELD

Embodiments of the present disclosure relate to the field of computer technology, and more particularly to a control method and apparatus for an autonomous vehicle.

### BACKGROUND

An autonomous vehicle is an intelligent vehicle that senses a road environment through an on-board sensing system, automatically plans a driving route, and controls the vehicle to reach a predetermined destination.

In the related art, there is a need for user interaction with an autonomous vehicle.

### SUMMARY

Embodiments of the present disclosure provide a control method and apparatus for an autonomous vehicle.

In a first aspect, an embodiment of the present disclosure provides a control method for an autonomous vehicle, including: acquiring vehicle traveling environment information; determining an intended traveling state of the autonomous vehicle based on the vehicle traveling environment information; and in response to detecting an interactive operation of a target user for the intended traveling state, generating a traveling state adjustment instruction corresponding to the interactive operation to control the autonomous vehicle to adjust a traveling state.

In some embodiments, the method further includes: controlling the autonomous vehicle to adjust the traveling state according to environment sensing information in response to receiving the environment sensing information transmitted by an external device in communication connection with the autonomous vehicle.

In some embodiments, the method further includes: presenting, on a preset terminal display screen, at least one of: the vehicle traveling environment information, the intended traveling state, or the environment sensing information.

In some embodiments, the method further includes: receiving a vehicle traveling route information set sent by a communicatively connected cloud server; and selecting the vehicle traveling route information from the vehicle traveling route information set to control the autonomous vehicle to travel along a road indicated by the selected vehicle traveling route information.

In some embodiments, the method further includes: presenting obstacle information for describing an obstacle in response to determining that the obstacle is present on a road on which the autonomous vehicle is traveling; and generating an obstacle elimination instruction corresponding to the obstacle confirmation operation in response to detecting an obstacle confirmation operation of the target user for the obstacle information, to control the autonomous vehicle to adjust the traveling state.

In some embodiments, the vehicle traveling environment information includes at least one of: vehicle position information, environment image information, in-vehicle equipment on-off information, or in-vehicle equipment energy consumption information.

In a second aspect, an embodiment of the present disclosure provides a control apparatus for an autonomous vehicle, including: an information acquiring unit configured to acquire vehicle traveling environment information; a state determining unit configured to determine an intended traveling state of the autonomous vehicle based on the vehicle traveling environment information; and a first adjusting unit configured to generate a traveling state adjustment instruction corresponding to an interactive operation in response to detecting the interactive operation of a target user for the intended traveling state to control the autonomous vehicle to adjust a traveling state.

In some embodiments, the apparatus further includes a second adjusting unit configured to control the autonomous vehicle to adjust the traveling state according to environment sensing information in response to receiving the environment sensing information transmitted by an external device in communication connection with the autonomous vehicle.

In some embodiments, the apparatus further includes an information display unit configured to present, on a preset terminal display screen, at least one of: the vehicle traveling environment information, the intended traveling state, or the environment sensing information.

In some embodiments, the apparatus further includes a route receiving unit configured to receive a vehicle traveling route information set sent by a communicatively connected cloud server; and a route selecting unit configured to select the vehicle traveling route information from the vehicle traveling route information set to control the autonomous vehicle to travel along a road indicated by the selected vehicle traveling route information.

In some embodiments, the apparatus further includes an information determining unit configured to present obstacle information for describing an obstacle in response to determining that the obstacle is present on a road on which the autonomous vehicle is traveling; and a third adjusting unit configured to generate an obstacle elimination instruction corresponding to the obstacle confirmation operation in response to detecting an obstacle confirmation operation of the target user for the obstacle information to control the autonomous vehicle to adjust the traveling state.

In some embodiments, the vehicle traveling environment information includes at least one of: vehicle position information, environment image information, in-vehicle equipment on-off information, or in-vehicle equipment energy consumption information.

In a third aspect, an embodiment of the present disclosure provides controller, including: one or more processors; and a storage apparatus storing one or more programs. The one or more programs, when executed by the one or more processors, cause the one or more processors to implement the method of any implementation in the first aspect.

In a fourth aspect, an embodiment of the present disclosure provides an autonomous vehicle, including the controller according to the third aspect.

In a fifth aspect, an embodiment of the present disclosure provides a computer readable storage medium, storing computer programs thereon. The programs, when executed by a processor, implement the method of any implementation in the first aspect.

According to the control method and apparatus for an autonomous vehicle provided by embodiments of the present disclosure, vehicle traveling environment information may be acquired. Then, based on the vehicle traveling environment information, an intended traveling state of the autonomous vehicle is determined. Finally, in response to detecting an interactive operation of a target user for the intended traveling state, a traveling state adjustment instruction corresponding to the interactive operation is generated to control the autonomous vehicle to perform the traveling state adjustment. According to the method and apparatus of the embodiments, it is possible to detect an interactive operation of a target user for the traveling state, thereby controlling an autonomous vehicle to adjust the traveling state based on the interactive operation, which contributes to improving flexible control of the autonomous vehicle.

### Brief DESCRIPTION OF THE DRAWINGS

Other features, objects, and advantages of the present disclosure will become more apparent by reading the detailed description of non-limiting embodiments made with reference to following drawings.
Fig. 1 is an example system architecture diagram in which an embodiment of the present disclosure may be applied;
Fig. 2 is a flowchart of a control method for an autonomous vehicle according to an embodiment of the present disclosure;
Fig. 3 is a schematic diagram of an application scenario of a control method for an autonomous vehicle according to an embodiment of the present disclosure;
Fig. 4 is a flowchart of a control method for an autonomous vehicle according another embodiment of to the present disclosure;
Fig. 5 is a schematic structural diagram of a control apparatus for an autonomous vehicle according to an embodiment of the present disclosure;
Fig. 6 is a schematic structural diagram of a computer system suitable for implementing a controller of an embodiment of the present disclosure.

### DETAILED DESCRIPTION

The present disclosure is described in further detail below with reference to accompanying drawings and embodiments. It is to be understood that the specific embodiments described herein are merely illustrative of the related disclosure and are not restrictive of the disclosure. It is also to be noted that, for ease of description, only parts related to the disclosure are shown in the drawings.

It should be noted that embodiments in the present disclosure and the features in the embodiments may be combined with each other without conflict. The present disclosure will now be described in detail with reference to the accompanying drawings and examples.

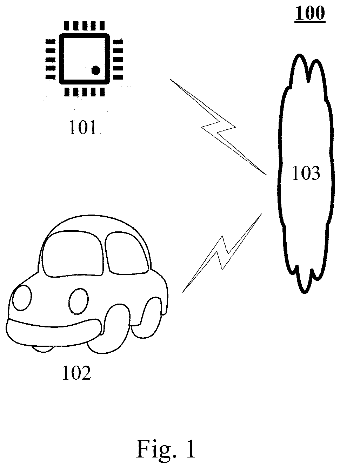

Fig. 1 illustrates an example system architecture 100 for a control method for an autonomous vehicle or a control apparatus for an autonomous vehicle to which embodiments of the present disclosure may be applied.

As shown in Fig. 1, the system architecture 100 may include a control apparatus 101, an autonomous vehicle 102, and a network 103. The network 103 serves as a medium for providing a communication link between the control apparatus 101 and the autonomous vehicle 102. The network 103 may include various types of connections, such as wired, wireless communication links, or fiber optic cables, etc.

The control apparatus 101 and the autonomous vehicle 102 may interact through the network 103 to receive or transmit messages, etc. The control apparatus 101 may be hardware or software. When the control apparatus is hardware, it may be a processor having an operational capability. The processor may control the autonomous vehicle 102. It should be noted that the control apparatus 101 may be integrated in the autonomous vehicle 102 or may exist separately from the autonomous vehicle 102. When the control apparatus 101 is software, it may be installed in the processor enumerated above. The control apparatus 101 may be implemented as a plurality of pieces of software or a plurality of software modules (e.g., for providing distributed services) or as a single piece of software or single software module, which is not specifically limited herein.

The autonomous vehicle 102 may interact with the control apparatus 101 via the network 103 to receive or transmit messages or the like. Various communication client applications, such as instant messaging tools, mailbox clients, and the like, may be installed on the autonomous vehicle 102. The autonomous vehicle 102 may be an autonomous vehicle capable of self-driving.

It should be noted that the control method for an autonomous vehicle provided in the present embodiment is generally executed by the control apparatus 101, and accordingly, the control apparatus for an autonomous vehicle is generally provided in the control apparatus 101.

It should be understood that the number of control apparatus, autonomous vehicles and networks in Fig. 1 is merely illustrative. There may be any number of control apparatus, autonomous vehicles, and networks as desired for implementation.

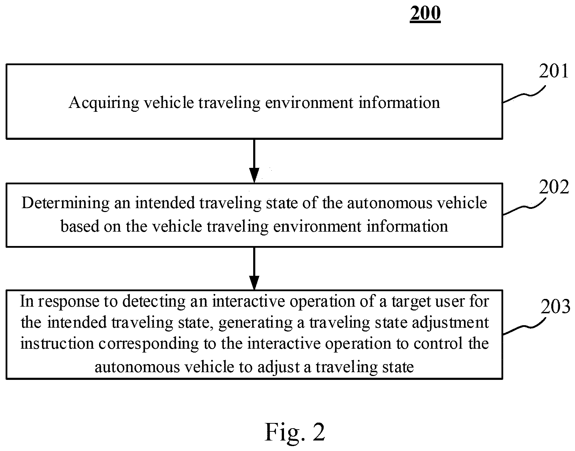

With continuing reference to Fig. 2, a flow diagram 200 of a control method for an autonomous vehicle according to an embodiment of the present disclosure is shown. The control method for an autonomous vehicle includes the following steps.

Step 201: acquiring vehicle traveling environment information.

In this embodiment, the executing body (for example, the control apparatus 101 shown in Fig. 1) of the control method for an autonomous vehicle may acquire the vehicle traveling environment information acquired by the information acquisition apparatus of the autonomous vehicle by means of a wired connection or a wireless connection. The information acquisition apparatus may be various devices for acquiring information. As an example, the information acquisition apparatus may be a camera, a speed sensor, a position sensor, or the like. The vehicle traveling environment information may be various information for describing the current environment in which the autonomous vehicle is located. Alternatively, the vehicle traveling environment information may include, but is not limited to, at least one of: vehicle position information, environment image information, in-vehicle equipment on-off information, or in-vehicle equipment energy consumption information. The vehicle position information may be various information for describing the current position of the autonomous vehicle. By way of example, the vehicle position information may be a GPS (Global Positioning System) coordinate value of a position where the autonomous vehicle is currently located. The above environment image information may be various image information for describing the environment in which the autonomous vehicle is currently located. As an example, the above-mentioned environment image information may be image information for describing a specified device in an autonomous vehicle, or may be image information for describing a road currently traveling. The in-vehicle equipment on-off information described above may be various information for describing the on-off state of the in-vehicle equipment. The in-vehicle equipment includes, but is not limited to, a vehicle lamp, an in-vehicle air conditioner, an in-vehicle speaker, a vehicle window, and the like. As an example, the in-vehicle equipment on-off information described above may be a character group "light-1" for describing that the vehicle lamp is in an on state. The above-mentioned in-vehicle equipment energy consumption information may be various information for describing in-vehicle equipment energy consumption. As an example, the in-vehicle equipment energy consumption information described above may be a character group "air conditioner-10%" for describing that the energy consumption of the in-vehicle air conditioner accounts for 10% of the total consumption.

It should be noted that in various embodiments of the present disclosure, the above-mentioned autonomous vehicle may be a variety of autonomous vehicles, or various other transportation means, such as, aircraft, ships, or the like.

Step 202: determining an intended traveling state of the autonomous vehicle based on the vehicle traveling environment information.

Alternatively, the intended traveling state includes at least one of: constant-speed advancement, accelerated advancement, decelerated advancement, parking, siren, turning on a lamp, or the like. In this embodiment, the executing body may analyze the acquired vehicle traveling environment information to determine an intended traveling state of the autonomous vehicle so that the autonomous vehicle can travel in accordance with the intended traveling state. As an example, in step 201, if the distance measurement information acquired by the executing body from the distance measurement sensor indicates that there is an obstacle 10 meters ahead, the intended traveling state of the autonomous vehicle may be set to decelerate to the right. As another example, in step 201, if the executing body acquires out-of-vehicle brightness information by from the brightness detector, when the out-of-vehicle brightness information indicates that the out-of-vehicle brightness is lower than a set brightness threshold, the intended traveling state of the autonomous vehicle may be set to turn on the external lamp. It should be noted that since an autonomous vehicle generally employs a plurality of information acquisition apparatus for information acquisition, a plurality of pieces of information may be included in the vehicle traveling environment information generally at the same time. When a plurality of pieces of information are included in the vehicle traveling environment information, for example, the vehicle traveling environment information includes both the distance measurement information obtained from the distance measurement sensor and the out-of-vehicle brightness information obtained from the brightness detector. At this time, the executing body may simultaneously analyze two pieces of information in the vehicle traveling environment information, and obtain an intended traveling state, which may be: decelerating to the right, and turning on the external lamp.

Step 203: in response to detecting an interactive operation of a target user for the intended traveling state, generating a traveling state adjustment instruction corresponding to the interactive operation to control the autonomous vehicle to adjust a traveling state.

The target user may be a user having control rights to the autonomous vehicle.

In this embodiment, the executing body may present the intended traveling state determined in step 202 to the target user through the terminal display screen. At this time, the terminal display screen may display description information about the intended traveling state. By way of example, the description information may be "accelerated advancement". In this way, the target user can perform the interactive operation by manually selecting the description information of the intended traveling state. As an example, the target user may select the description information of the intended traveling state by the touch mode or the key mode to perform the interactive operation. In this way, the executing body can detect the above-mentioned interactive operation by the change of the touch information or change of the key information. Here, specifically, the interactive operation process may be such that the target user selects the description information of the determined intended traveling state, and then selects the description information of the desired candidate traveling state from the description information of the plurality of candidate traveling states associated with the determined intended traveling state. As an example, the target user may click the determined description information of the intended traveling state, and then select "constant-speed advancement" from the description information of "accelerated advancement", "decelerated advancement", and "constant-speed advancement" associated with the determined intended traveling state.

In addition, the executing body may play the intended traveling state determined in step 202 to the target user through the voice play device. At this time, the voice play device may play a description voice of the intended traveling state. By way of example, the described speech may be "accelerated advancement". In this way, the target user can perform the interactive operation in such a manner that the description information of the intended traveling state is to be selected by the voice. As an example, the target user may perform an interactive operation by issuing a control voice corresponding to the above described voice. Here, the control voice includes descriptive voice. As an example, if the descriptive voice is "accelerated advancement", then the control voice may be "accelerated advancement, please drive slowly". In this way, the executing body can detect the above-mentioned interactive operation through the voice change.

In addition, the executing body may present the intended traveling state determined in step 202 to the target user through the terminal display screen, and play the intended traveling state determined in step 202 to the target user through the voice play device. In this way, the target user can select one or both of the manners of manually selecting the description information of the intended traveling state and selecting by voice the description information of the intended traveling state to perform the interactive operation.

In the present embodiment, after detecting the interactive operation of the target user for the intended traveling state, the executing body may generate the traveling state adjustment instruction corresponding to the interactive operation, thereby transmitting the traveling state adjustment instruction to the corresponding executing device of the autonomous vehicle, to control the autonomous vehicle to perform the traveling state adjustment. The executing device may be a motor, a window controller, or the like. The traveling state adjustment instruction corresponding to the interactive operation is generally an instruction for executing the adjustment of the determined traveling state to the traveling state desired by the target user. As an example, the above-described traveling state adjustment instruction corresponding to the interactive operation may be an instruction for executing the adjustment of opening the window to closing the window. At this time, the executing body sends the traveling state adjustment instruction to the window controller of the autonomous vehicle. As another example, the above-described traveling state adjustment instruction corresponding to the interactive operation may alternatively be an instruction for executing the adjustment of accelerated advancement to constant-speed advancement. At this time, the executing body sends the traveling state adjustment instruction to the motor of the autonomous vehicle.

In some alternative implementations of the present embodiment, the control method for the autonomous vehicle may further include: controlling the autonomous vehicle to adjust the traveling state according to the environment sensing information in response to receiving the environment sensing information transmitted by an external device in communication connection with the autonomous vehicle.

The external device is generally a variety of devices which are communicatively connected to the autonomous vehicle and can emit environment sensing information. As an example, the external device may be a vehicle, a traffic light, or the like. The environment sensing information may be various information used to describe the environment in which the external device is located. The environment sensing information may include, but is not limited to, device location information and device environment image information. The device location information may be various information for describing the current location of the external device. As an example, the device location information may be a GPS coordinate value of the location where the external device is currently located. The device environment image information may be various image information for describing the environment in which the external device is currently located.

Here, after receiving the environment sensing information transmitted by the external device, the executing body may generate a corresponding control instruction by analyzing the received environment sensing information to control the autonomous vehicle to perform state adjustment. As an example, if the current position of the executing body is A, and the environment sensing information of the external device C indicates that the current position of the external device C is B. At this time, the executing body may first calculate the relative distance between A and B. If the relative distance is greater than the first distance threshold, a control instruction for controlling the autonomous vehicle to adjust the traveling state to accelerated advancement may be generated. If the relative distance is less than the first distance threshold and greater than the second distance threshold, a control instruction for controlling the autonomous vehicle to adjust the traveling state to constant-speed advancement may be generated. If the relative distance is less than the second distance threshold, a control instruction for controlling the autonomous vehicle to adjust the traveling state to decelerated advancement may be generated. The first distance threshold and the second distance threshold may be data values preset by a technician, which are not limited herein. Note that the manner in which the executing body controls the autonomous vehicle to adjust the traveling state according to the control instruction is substantially the same as the manner in which the autonomous vehicle is controlled to adjust the traveling state according to the traveling state adjustment instruction in step 203, and repeatedly details are not described herein.

In some alternative implementations of the present embodiment, the control method for an autonomous vehicle may further include: presenting, on a preset terminal display screen, at least one of vehicle traveling environment information, the intended traveling state, or the environment sensing information.

Here, the preset terminal display screen may be a variety of terminal display screens in which a technician is pre-installed in an autonomous vehicle. As an example, the preset terminal display screen may be a touch-control tablet computer. Here, the information is presented by the preset terminal display screen, so that the flexibility of interaction between the target user and the autonomous vehicle can be further improved.

In some alternative implementations of the present embodiment, the control method for an autonomous vehicle may further include: presenting obstacle information for describing an obstacle in response to determining that the obstacle is present on a road on which the autonomous vehicle is traveling. The obstacle information may be various information for describing an obstacle. Here, the executing body may judge whether or not an obstacle exists on the traveling road by acquiring and analyzing the image captured by the camera. The executing body may also determine whether an obstacle exists on the traveling road by acquiring and analyzing the distance information acquired by the distance measuring sensor. When the executing body determines that an obstacle exists on the road traveled, obstacle information for describing the obstacle may be presented. Here, the executing body may present the obstacle information in a display form through the terminal display screen, or may present the obstacle information in a voice playing form through the voice play device.

Generating an obstacle elimination instruction corresponding to the obstacle confirmation operation in response to detecting an obstacle confirmation operation of the target user for the obstacle information, to control the autonomous vehicle to adjust the traveling state. Here, the executing body may present the obstacle information to the target user through the terminal display screen. In this way, the target user can perform the obstacle confirmation operation by manually selecting the obstacle information. As an example, the target user may select the obstacle information by the touch mode or the key mode, and perform an obstacle confirmation operation. Thus, the executing body can detect the obstacle confirmation operation by the change of the touch information or the change of the key information. Here, the obstacle confirmation operation may be a confirmation operation of the obstacle information by the target user. For example, the target user may click the obstacle information, and then select "this obstacle is invalid" from "this obstacle is valid" and "this obstacle is invalid" associated with the obstacle information. Here, "this obstacle is invalid" is used to characterize that the obstacle determined by the executing body is wrong, and "this obstacle is valid" is used to characterize that the obstacle determined by the executing body is correct. Here, if the target user selects "this obstacle is invalid", an obstacle elimination instruction for adjusting the intended traveling state of the obstacle to the traveling state without the obstacle is generated. If the target user selects "this obstacle is valid", an obstacle elimination instruction for continuing to execute the intended traveling state for the obstacle is generated. It should be noted that the detection of the obstacle confirming operation helps to assist the autonomous vehicle to travel better. At the same time, the flexibility of interaction between the target user and the autonomous vehicle can be further improved.

In addition, the executing body may play the obstacle information to the target user through the voice play device. At this time, the voice playing device may play the obstacle information. In this way, the target user can perform the obstacle confirmation operation by means of voice selection of obstacle information. As an example, the target user may perform an obstacle confirmation operation by issuing an obstacle removal control voice corresponding to the obstacle information. Here, the obstacle removal control voice includes obstacle information. As an example, if the obstacle information is "there is a larger obstacle in front of 2 meters", at this time, the obstacle removal control voice may be "there is a large obstacle in front of 2 meters, please ignore". In this manner, the executing body can detect the obstacle confirmation operation by voice change.

In addition, the executing body may present the obstacle information to the target user through the terminal display screen, and play the obstacle information to the target user through the voice play device. Thus, the target user can select one or both of the means of manually selecting the obstacle information and the means of selecting by voice the obstacle information to perform the obstacle confirmation operation.

In the present embodiment, after detecting the obstacle confirmation operation of the target user for the obstacle information, the executing body may generate an obstacle elimination instruction corresponding to the obstacle confirmation operation, thereby transmitting the obstacle elimination instruction to the corresponding executing device of the autonomous vehicle, thereby enabling the autonomous vehicle to be controlled to perform the traveling state adjustment. It should be noted that the manner in which the executing body controls the autonomous vehicle to perform the traveling state adjustment according to the obstacle elimination instruction is substantially the same as the manner in which the autonomous vehicle is controlled to perform the traveling state adjustment according to the traveling state adjustment instruction in step 203, and repeatedly details are not described herein.

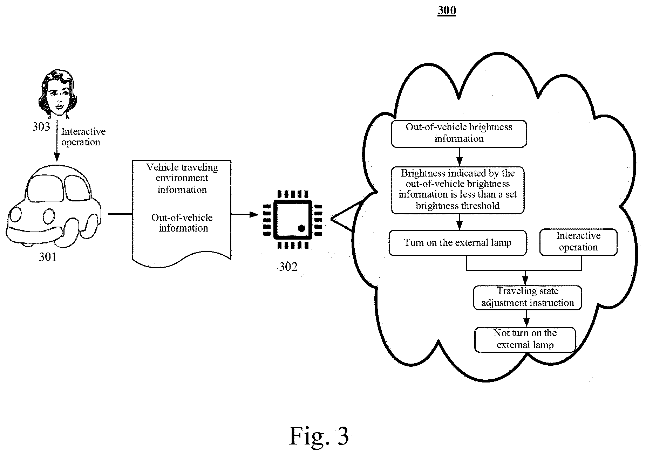

With continued reference to Fig. 3, Fig. 3 is a schematic diagram of an application scenario of a control method for an autonomous vehicle according to the present embodiment. In the application scenario of Fig. 3, first, the control apparatus 302 acquires vehicle traveling environment information (e.g., out-of-vehicle brightness information) acquired by the information acquisition apparatus of the autonomous vehicle 301. Then, based on the vehicle traveling environment information, the intended traveling state of the autonomous vehicle is determined. At this time, the control apparatus 302 may compare the brightness indicated by the out-of-vehicle brightness information with a preset brightness threshold, and if the brightness is less than the preset brightness threshold, determine that the intended traveling state is turning on the external lamp. Finally, in response to detecting an interactive operation in which the target user 303 clicks on the "turning on the external lamp", a traveling state adjustment instruction corresponding to the interactive operation is generated and sent to the power supply of the external lamp. Specifically, if the target user 303 finds that the determined intended traveling state of turning on the external lamp does not match the actual environment, or the target user 303 does not want to turn on the external lamp at this time, the "not turning on the external lamp" displayed in association with the "turning on the external lamp" may be selected. In this way, the control apparatus may generate a traveling state adjustment instruction based on the interaction operation of the target user 303 to control the power supply of the external lamp of the autonomous vehicle to be powered off.

According to the control method for an autonomous vehicle provided in the above embodiments of the present disclosure, the vehicle traveling environment information may be acquired. Then, based on the vehicle traveling environment information, the intended traveling state of the autonomous vehicle is determined. Finally, in response to detecting an interactive operation of the target user for the intended traveling state, a traveling state adjustment instruction corresponding to the interactive operation is generated to control the autonomous vehicle to adjust the traveling state. According to the method of the present embodiment, the interactive operation of the target user for the traveling state may be detected, thereby controlling the autonomous vehicle to adjust the traveling state based on the interactive operation, thereby helping to improve the flexible control of the autonomous vehicle.

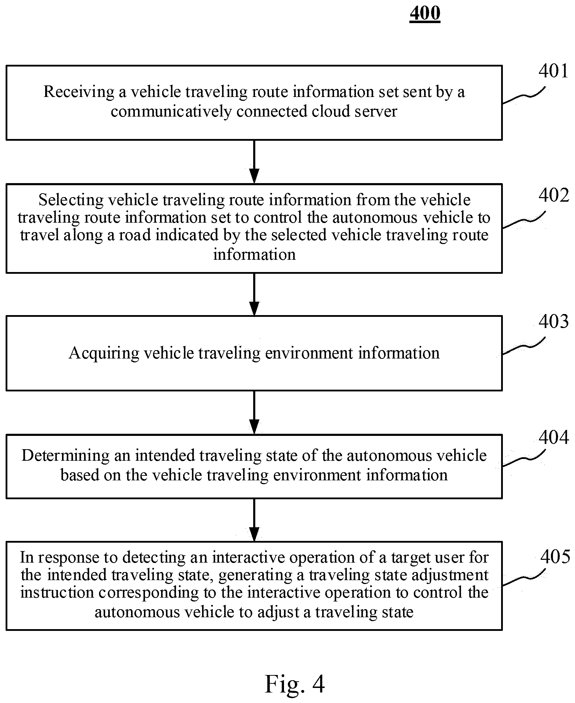

Referring further to Fig. 4, there is shown a flow 400 of a control method for an autonomous vehicle according to another embodiment. The flow 400 of the control method for an autonomous vehicle includes the following steps.

Step 401: receiving a vehicle traveling route information set sent by a communicatively connected cloud server.

In this embodiment, the executing body may receive the vehicle traveling route information set from the cloud server through a wired connection mode or a wireless connection mode. The vehicle traveling route information includes road information. It should be noted that the executing body directly receives the vehicle traveling route information set from the cloud server to determine the vehicle traveling route, which can save the time for determining the route by the executing body and contribute to improving the control efficiency of the autonomous vehicle.

Step 402: selecting vehicle traveling route information from the vehicle traveling route information set to control the autonomous vehicle to travel along a road indicated by the selected vehicle traveling route information.

In this embodiment, the executing body may randomly select one piece of vehicle traveling route information from the vehicle traveling route information set, or may select the vehicle traveling route information corresponding to the shortest route from the vehicle traveling route information set.

Step 403: acquiring vehicle traveling environment information.

Step 404: determining an intended traveling state of the autonomous vehicle based on the vehicle traveling environment information.

Step 405: in response to detecting an interactive operation of a target user for the intended traveling state, generating a traveling state adjustment instruction corresponding to the interactive operation to control the autonomous vehicle to adjust a traveling state.

In the present embodiment, the specific operations of steps 403-405 are substantially the same as the operations of steps 201-203 in the embodiment shown in Fig. 2, and details are not repeated herein.

As can be seen from Fig. 4, compared with the embodiment corresponding to Fig. 2, the flow 400 of the control method for an autonomous vehicle in this embodiment embodies the steps of receiving the vehicle traveling route information set sent by the cloud server and selecting the vehicle traveling route information from the vehicle traveling route information set. As a result, the solution described in this embodiment can save the time of determining the route by the executing body and help to improve the control efficiency of the autonomous vehicle.

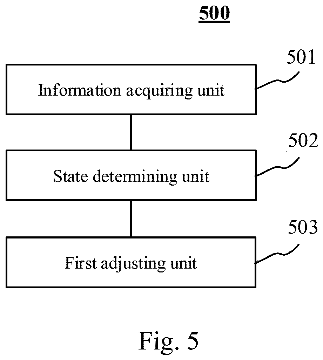

With further reference to Fig. 5, as an implementation of the method shown in each of the above figures, an embodiment of the present disclosure provides a control apparatus for an autonomous vehicle, which corresponds to the method embodiment shown in Fig. 2. The apparatus may be particularly applicable to various electronic devices.

As shown in Fig. 5, the control apparatus 500 for an autonomous vehicle according to the present embodiment includes an information acquiring unit 501 configured to acquire vehicle traveling environment information; a state determining unit 502 configured to determine an intended traveling state of the autonomous vehicle based on the vehicle traveling environment information; a first adjusting unit 503 configured to generate a traveling state adjustment instruction corresponding to an interactive operation in response to detecting the interactive operation of the target user for the intended traveling state, to control the autonomous vehicle to adjust a traveling state.

In some alternative implementations of the present embodiment, the apparatus may further include a second adjusting unit (not shown in the figure). The second adjusting unit may be configured to control the autonomous vehicle to adjust the traveling state according to the environment sensing information in response to receiving the environment sensing information transmitted by an external device in communication connection with the autonomous vehicle.

In some alternative implementations of the present embodiment, the apparatus may further include an information display unit (not shown in the figure). The information display unit may be configured to present, on a preset terminal display screen, at least one of vehicle traveling environment information, the intended traveling state, or the environment sensing information.

In some alternative implementations of the present embodiment, the apparatus may further include a route receiving unit and a route selecting unit (not shown in the figure). The route receiving unit may be configured to receive a vehicle traveling route information set sent by a communicatively connected cloud server. The route selecting unit may be configured to select the vehicle traveling route information from the vehicle traveling route information set to control the autonomous vehicle to travel along a road indicated by the selected vehicle traveling route information.

In some alternative implementations of the present embodiment, the vehicle traveling environment information may include at least one of vehicle position information, environment image information, in-vehicle equipment on-off information, in-vehicle equipment energy consumption information.

In some alternative implementations of the present embodiment, the apparatus may further comprise an information determining unit and a third adjusting unit (not shown in the figure). The information determining unit may be configured to present obstacle information for describing an obstacle in response to determining that the obstacle is present on a road on which the autonomous vehicle is traveling. The third adjusting unit may be configured to generate an obstacle elimination instruction corresponding to the obstacle confirming operation in response to detecting an obstacle confirming operation of the target user for the obstacle information, to control the autonomous vehicle to adjust the traveling state.

According to the apparatus provided in the embodiment of the present disclosure, the information acquiring unit 501 acquires vehicle traveling environment information. Then, the state determining unit 502 determines an intended traveling state of the autonomous vehicle based on the vehicle traveling environment information. Finally, the first adjusting unit 503 generates a traveling state adjustment instruction corresponding to an interactive operation in response to detecting the interactive operation of the target user for the intended traveling state, and controls the autonomous vehicle to adjust a traveling state. According to the apparatus of the present embodiment, the interactive operation of the target user for the traveling state may be detected, thereby controlling the autonomous vehicle to adjust the traveling state based on the interactive operation, thereby contributing to improving the flexible control of the autonomous vehicle.

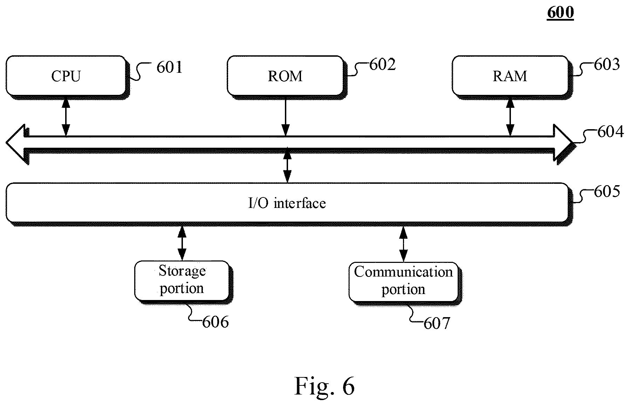

Referring to Fig. 6, Fig. 6 is a schematic structural diagram of a computer system 600 adapted to implement a controller of embodiments of the present disclosure. The controller shown in Fig. 6 is only an example, and should not bring any limitation to the functionality and the scope of use of the embodiments of the present disclosure.

As shown in Fig. 6, the computer system 600 may include a central processing unit (CPU) 601, which may execute various appropriate actions and processes in accordance with a program stored in a read-only memory (ROM) 602 or a program loaded into a random access memory (RAM) 603 from a storage apparatus 608. The RAM 603 also stores various programs and data required by operations of the computer system 600. The CPU 601, the ROM 602 and the RAM 603 are connected to each other through a bus 604. An input/output (I/O) interface 605 is also connected to the bus 604.

Typically, the following apparatuses may be connected to the I/O interface 605: a storage portion 606 including a hard disk or the like; and a communication portion 607 including a network interface card such as a LAN card, a modem, or the like. The communication portion 607 performs communication processing via a network such as the Internet.

It should be noted that the controller may exist alone or may be installed in the autonomous vehicle. When the controller is installed in the autonomous vehicle, the functionality may be integrated in a processor of a control system of the autonomous vehicle. At this time, an input portion including a camera, a sensor, a radar, or the like, an output portion including a liquid crystal display (LCD), a speaker, or the like, and a motor driver may also be connected to the I/O interface 605 as required. The motor driver may drive the mobile device to complete the movement of the autonomous vehicle according to the control information sent by the CPU. The driver may also be connected to the I/O interface 605 as desired. A removable medium, such as a magnetic disk, an optical disk, a magneto-optical disk, a semiconductor memory, or the like, may be mounted on the drive as required so that a computer program read therefrom is mounted into the storage portion 606 as required. Thus, when the central processing unit (CPU) 601 invokes the computer program to execute the functionality of controlling the autonomous vehicle, it is possible to control the input section to acquire the vehicle traveling environment information of the autonomous vehicle from the outside.

In particular, according to the embodiments of the present disclosure, the process described above with reference to the flow chart may be implemented in a computer software program. For example, an embodiment of the present disclosure includes a computer program product, which includes a computer program that is tangibly embedded in a computer-readable medium. The computer program includes program codes for performing the method as illustrated in the flow chart. In such an embodiment, the computer program may be downloaded and installed from a network via the communication portion 607. The computer program, when executed by the CPU 601, implements the above mentioned functionalities as defined by the method of the embodiments of the present disclosure.

It should be noted that the computer readable medium described by the embodiments of the present disclosure may be computer readable signal medium or computer readable storage medium or any combination of the above two. An example of the computer readable storage medium may include, but not limited to: electric, magnetic, optical, electromagnetic, infrared, or semiconductor systems, apparatus, elements, or a combination of any of the above. A more specific example of the computer readable storage medium may include but is not limited to: electrical connection with one or more wire, a portable computer disk, a hard disk, a random access memory (RAM), a read only memory (ROM), an erasable programmable read only memory (EPROM or flash memory), a fiber, a portable compact disk read only memory (CD-ROM), an optical memory, a magnet memory or any suitable combination of the above. In the embodiments of the present disclosure, the computer readable storage medium may be any physical medium containing or storing programs which may be used by a command execution system, apparatus or element or incorporated thereto. While in the embodiments of the present disclosure, the computer readable signal medium may include data signal in the base band or propagating as parts of a carrier, in which computer readable program codes are carried. The propagating data signal may take various forms, including but not limited to: an electromagnetic signal, an optical signal or any suitable combination of the above. The signal medium that can be read by computer may be any computer readable medium except for the computer readable storage medium. The computer readable signal medium is capable of transmitting, propagating or transferring programs for use by, or used in combination with, a command execution system, apparatus or element. The program codes contained on the computer readable medium may be transmitted with any suitable medium including but not limited to: wired, optical cable, RF medium etc., or any suitable combination of the above.

The flow charts and block diagrams in the accompanying drawings illustrate architectures, functionalities and operations that may be implemented according to the systems, methods and computer program products of the various embodiments of the present disclosure. In this regard, each of the blocks in the flow charts or block diagrams may represent a module, a program segment, or a code portion, said module, program segment, or code portion comprising one or more executable instructions for implementing specified logic functions. It should also be noted that, in some alternative implementations, the functions denoted by the blocks may occur in a sequence different from the sequences shown in the figures. For example, any two blocks presented in succession may be executed, substantially in parallel, or they may sometimes be in a reverse sequence, depending on the function involved. It should also be noted that each block in the block diagrams and/or flow charts as well as a combination of blocks may be implemented using a dedicated hardware-based system executing specified functions or operations, or by a combination of a dedicated hardware and computer instructions.

The units involved in the embodiments of the present disclosure may be implemented by means of software or hardware. The described units may also be provided in a processor, for example, described as: a processor, including an information acquiring unit, a state determining unit, and a first adjusting unit. Here, the names of these units do not in some cases constitute a limitation to such units themselves. For example, the information acquiring unit may also be described as "a unit configured to acquire vehicle traveling environment information."

In another aspect, an embodiment of the present disclosure further provides a computer readable storage medium. The computer-readable medium may be embodied in the apparatus described in the above-described embodiments, may also be present alone and not fitted into the apparatus. The computer readable storage medium stores one or more programs thereon. The programs, when executed by the apparatus, cause the apparatus to: acquire vehicle traveling environment information; determine an intended traveling state of the autonomous vehicle based on the vehicle traveling environment information; and generate a traveling state adjustment instruction corresponding to an interactive operation in response to detecting the interactive operation of a target user for the intended traveling state to control the autonomous vehicle to adjust a traveling state.

The above description only provides an explanation of the preferable embodiments of the present disclosure and the technical principles used. It should be appreciated by those skilled in the art that the inventive scope of the present disclosure is not limited to the technical solutions formed by the particular combinations of the above-described technical features. The inventive scope should also cover other technical solutions formed by any combinations of the above-described technical features or equivalent features thereof without departing from the concept of the disclosure. Technical schemes formed by the above-described features being interchanged with, but not limited to, technical features with similar functions disclosed in the present disclosure are examples.

## Claims

1. A control method for an autonomous vehicle, comprising:
acquiring vehicle traveling environment information;
determining an intended traveling state of the autonomous vehicle based on the vehicle traveling environment information; and
in response to detecting an interactive operation of a target user for the intended traveling state, generating a traveling state adjustment instruction corresponding to the interactive operation to control the autonomous vehicle to adjust a traveling state.

2. The method of claim 1, wherein the method further comprises:
controlling the autonomous vehicle to adjust the traveling state according to environment sensing information in response to receiving the environment sensing information transmitted by an external device in communication connection with the autonomous vehicle.

3. The method of claim 2, wherein the method further comprises:
presenting, on a preset terminal display screen, at least one of: the vehicle traveling environment information, the intended traveling state, or the environment sensing information.

4. The method of claim 1, wherein the method further comprises:
receiving a vehicle traveling route information set sent by a communicatively connected cloud server; and
selecting the vehicle traveling route information from the vehicle traveling route information set to control the autonomous vehicle to travel along a road indicated by the selected vehicle traveling route information.

5. The method of any one of claims 1-4, wherein the method further comprises:
presenting obstacle information for describing an obstacle in response to determining that the obstacle is present on a road on which the autonomous vehicle is traveling; and
generating an obstacle elimination instruction corresponding to the obstacle confirmation operation in response to detecting an obstacle confirmation operation of the target user for the obstacle information, to control the autonomous vehicle to adjust the traveling state.

6. The method of any one of claims 1-4, wherein the vehicle traveling environment information comprises at least one of: vehicle position information, environment image information, in-vehicle equipment on-off information, or in-vehicle equipment energy consumption information.

7. A control apparatus for an autonomous vehicle, comprising:
an information acquiring unit configured to acquire vehicle traveling environment information;
a state determining unit configured to determine an intended traveling state of the autonomous vehicle based on the vehicle traveling environment information; and
a first adjusting unit configured to generate a traveling state adjustment instruction corresponding to an interactive operation in response to detecting the interactive operation of a target user for the intended traveling state to control the autonomous vehicle to adjust a traveling state.

8. The apparatus of claim 7, further comprising:
a second adjusting unit configured to control the autonomous vehicle to adjust the traveling state according to environment sensing information in response to receiving the environment sensing information transmitted by an external device in communication connection with the autonomous vehicle.

9. The apparatus of claim 8, further comprising:
an information display unit configured to present, on a preset terminal display screen, at least one of: the vehicle traveling environment information, the intended traveling state, or the environment sensing information.

10. The apparatus of claim 7, further comprising:
a route receiving unit configured to receive a vehicle traveling route information set sent by a communicatively connected cloud server; and
a route selecting unit configured to select the vehicle traveling route information from the vehicle traveling route information set to control the autonomous vehicle to travel along a road indicated by the selected vehicle traveling route information.

11. The apparatus of any one of claims 7-10, further comprising:
an information determining unit configured to present obstacle information for describing an obstacle in response to determining that the obstacle is present on a road on which the autonomous vehicle is traveling; and
a third adjusting unit configured to generate an obstacle elimination instruction corresponding to the obstacle confirmation operation in response to detecting an obstacle confirmation operation of the target user for the obstacle information to control the autonomous vehicle to adjust the traveling state.

12. The apparatus of any one of claims 7-10, wherein the vehicle traveling environment information comprises at least one of: vehicle position information, environment image information, in-vehicle equipment on-off information, or in-vehicle equipment energy consumption information.

13. A controller, comprising:
one or more processors; and
a storage apparatus storing one or more programs,
wherein the one or more programs, when executed by the one or more processors, cause the one or more processors to implement a method of any one of claims 1-6.

14. An autonomous vehicle, comprising the controller of claim 13.

15. A computer readable storage medium, storing computer programs thereon, wherein the programs, when executed by a processor, implements the method of any one of claims 1-6.
